# EUROPEAN PATENT APPLICATION

(11) **EP 3 032 481 A1**
(43) Date of publication of application: **15.06.2016**
(21) Application number: 15000593.2
(22) Date of filing: 02.03.2015
(51) Int. Cl.: G06Q 30/02, G06Q 10/02, G06Q 50/14

(54) **Interacting with a database storing discount rules**

(30) Priority: 10.12.2014 US 201414565804
(71) Applicant: Amadeus S.A.S., 06410 Biot (FR)
(72) Inventor: Muharemovic, Amar, 06600 Antibes (FR); Pasquini, Ilaria, 06220 Vallauris (FR); Alles, Irina, 06250 Mougins (FR); Colin, Jeremy, 06300 Nice (FR); Sabatier, Romuald, 83170 (FR)
(74) Representative: Samson & Partner Patentanwälte mbB

(57) **Abstract**

Methods, systems, and computer program products for interacting with and managing a database that stores discounts. A booking file is received that includes a plurality of data elements. A discount rule is retrieved from a discount rule database. The discount rule is potentially applicable to the itinerary based on the data elements in the booking file. The discount rule is associated with at least one condition, and is valid to price the fare if the at least one condition is satisfied. If the at least one condition is satisfied, a reference corresponding to the discount rule is added to the data elements. A pricing engine is provided with the data elements and prices the fare based on a discount associated with the discount rule.

## Description

### TECHNICAL FIELD

The invention generally relates to computers, databases, and computer systems and, in particular, to methods, systems, and computer program products for interacting with and managing a database that stores discounts.

### BACKGROUND

Computer technology is used in the travel industry to manage and support travel reservations, as well as the associated data. In particular, booking agents (i.e., travel agencies) may book travel by remotely interfacing with a reservation system that in turn interfaces with inventory systems of one or more travel providers (e.g., airlines, rail travel merchants, bus travel merchants, etc.) to book one or more travel inventory items from the one or more travel merchants. The reservation agent may create and/or modify a Passenger Name Record (PNR) with a travel reservation device (e.g., a terminal used by a booking agent) to initialize a reservation session with the reservation system and thereby book a travel solution for a customer associated with the PNR.

As some point during the booking process, the booking agent may generate a pricing query that is addressed by a pricing engine. The pricing engine may apply discounts to price an itinerary and reply with priced travel solutions or fares. Discounts may relate to, for example, the age of the passenger, the type of passenger, the number of passengers in a group, or a market of the travel provider. Discounts permit the customer to book travel with reduced pricing. Excessively high trip prices at the time of booking that omit a potential fare discount may prompt a potential customer to make alternative travel arrangements or to even forgo taking the trip altogether. As a result, a travel provider may lose a sale.

In the airline industry, for example, a booking agent may be required to manually enter the fare discounts into the booking file before the itinerary is priced. If a discount is omitted at the time of pricing, the pricing will not reflect the discount despite the passenger being otherwise eligible for the discount. Further, the booking agent must mentally remember all the available discounts and determine whether the data elements in the booking file satisfy the one or more conditions associated with each potential discount.

Improved systems, methods, and computer program products for interacting with and managing a database that stores discounts are needed.

### SUMMARY

In an embodiment of the invention, a system is provided for pricing a fare. The system includes a discount rule database including a discount rule and a central server coupled in communication with the discount rule database. The central server includes at least one first processor and a first memory including instructions that, when executed by the at least one first processor, cause the central server to receive a request to price the fare, retrieve the discount rule from the discount rule database, determine whether the discount rule is applicable to price the fare based on a plurality of data elements included in the request, and update the data elements to include a reference to the discount rule in response to the determination indicating that the discount rule is applicable to price the fare. The system further includes a pricing engine coupled in communication with the central server. The pricing engine includes at least one second processor and a second memory including instructions that, when executed by the at least one second processor, cause the pricing engine to receive the data elements communicated from the central server, and determine a price of the fare based upon a fare discount that is associated with the reference to the discount rule.

In an embodiment of the invention, a method is provided for pricing a fare. The method includes receiving, at a central server, a request to price the fare. The central server retrieves a discount rule from a discount rule database, and determines whether the discount rule is applicable to price the fare based on a plurality of data elements included in the request. In response to the determination indicating that the discount rule is applicable to price the fare, the central server updates the data elements to include a reference to the discount rule. The data elements are communicated from the central server to a pricing engine. The pricing engine determines a price of the fare based upon a fare discount that is associated with the reference to the discount rule.

In an embodiment of the invention, a computer program product is provided. The computer program product comprises a non-transitory computer-readable storage medium and instructions stored on the non-transitory computer-readable storage medium that, when executed by at least one processor, cause the at least one processor to receive a request to price the fare, retrieve a discount rule from a discount rule database, determine whether the discount rule is applicable to price the fare based on a plurality of data elements included in the request, update the data elements to include a reference to the discount rule in response to the determination indicating that the discount rule is applicable to price the fare, and determine a price of the fare based upon a fare discount that is associated with the reference to the discount rule.

### BRIEF DESCRIPTION OF THE SEVERAL VIEWS OF THE DRAWINGS

The accompanying drawings, that are incorporated in and constitute a part of this specification, illustrate various embodiments of the invention and, together with the general description of the invention given above, and the detailed description of the embodiments given below, serve to explain the embodiments of the invention.
FIG. 1 is a diagrammatic view of an exemplary operating environment including a central server in communication with a computing device via a network.
FIG. 2 is a diagrammatic view of an exemplary computer system of FIG. 1.
FIG. 3 is a schematic view of a central server, including a discount database and a discount catalog.
FIG. 4 is a graphical view of an exemplary passenger name record.
FIG. 5 is a graphical view of an exemplary discount rule table.
FIG. 6 is a graphical view of an exemplary discount catalog.
FIG. 7 is a graphical view of an exemplary set of actions and corresponding data flow between a booking agent, central server, and pricing engine.
FIG. 8 is a flowchart of a fare discount consideration process that may be performed by the central server of FIG. 3.
FIG. 9 is a schematic view of a discount administration interface and a discount database.
FIG. 10 is a graphical view of an exemplary main menu of a discount administration interface.
FIG. 11 is a flowchart of a discount administration process that may be performed by the central server of FIG. 3.

### DETAILED DESCRIPTION

Embodiments of the invention are directed to methods and systems for pricing a fare for a passenger to travel along a segment or to travel in accordance with an itinerary. Embodiments of the invention may be implemented by a central server comprising one or more networked computers or servers. The networked computers may be operated by a Global Distribution System (GDS) and may provide processing and database functions for travel-related systems and modules that price passenger fares.

The central server may include a discount rule database for use in determining whether the passenger is eligible for any available discounts through satisfaction of a discount rule. The central server retrieves fare discount rules and the conditions associated therewith from a discount rule table. The central server thereafter reviews each discount rule and the associated conditions with respect to the data elements supplied from a booking file to determine whether the data elements satisfy the conditions of the discount rule. If the central server determines the discount rule conditions are satisfied by the data elements, the central server stores a reference identifier for the discount associated with the discount rule in the data elements. Conversely, if the central server determines the data elements of the booking file do not satisfy the conditions associated the discount rule, the central server continues on to evaluate another discount rule or price the fare.

To price a fare, the pricing engine receives data elements from the booking file and prices the fare based on data elements such as the itinerary and the passenger information. The pricing engine reviews the booking file for any discounts stored therein and prices the fare in accordance with the stored discounts. After the pricing engine prices the fare, the central server may create a transitional stored ticket incorporating the determined fares therein. The transitional stored ticket reserves a space on the underlying travel segment for the passenger to ensure the passenger can rely on the priced fare when finalizing the booking process.

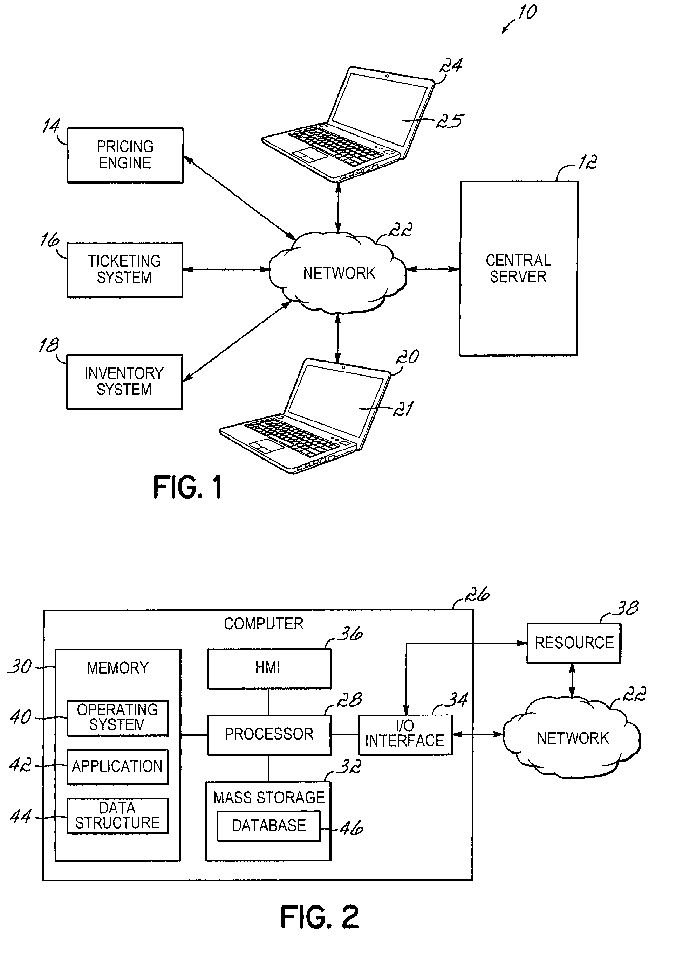

Referring now to FIG. 1, an operating environment 10 in accordance with an embodiment of the invention may include or reside within a central server 12, which may be located at a global distribution system (GDS). The central server 12 facilitates automated transactions between third parties and booking agents in order to provide travel-related services to end consumers. The central server 12 can link services, rates and bookings consolidating products and services across multiple travel sectors, for example, airline reservations, hotel reservations, car rentals, and activities. Operating environment 10 may further include a pricing engine 14, a ticketing system 16, and an inventory system 18. The central server 12, pricing engine 14, ticketing system 16, and inventory system 18 may communicate with each other through a network 22. Network 22 may include one or more private or public networks (e.g. the Internet) that enable the exchange of data. As shown in FIG. 1, a travel provider computing device 20 having a display screen 21 and a booking agent computing device 24 having a display screen 25 may communicate with the central server 12 through network 22.

Referring now to FIG. 2, the central server 12, pricing engine 14, ticketing system 16, inventory system 18, travel provider computing device 20, and booking agent computing device 24 of operating environment 10 may be implemented on one or more computer devices or systems, such as exemplary computer system 26. The computer system 26 may include a processor 28, a memory 30, a mass storage memory device 32, an input/output (I/O) interface 34, and a Human Machine Interface (HMI) 36. The computer system 26 may also be operatively coupled to one or more external resources 38 via the network 22 or I/O interface 34. External resources may include, but are not limited to, servers, databases, mass storage devices, peripheral devices, cloud-based network services, or any other suitable computer resource that may used by the computer system 26.

The processor 28 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 30. Memory 30 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 32 may include data storage devices such as a hard drive, optical drive, tape drive, non-volatile solid state device, or any other device capable of storing information.

Processor 28 may operate under the control of an operating system 40 that resides in memory 30. The operating system 40 may manage computer resources so that computer program code embodied as one or more computer software applications, such as an application 42 residing in memory 30, may have instructions executed by the processor 28. In an alternative embodiment, the processor 28 may execute the application 42 directly, in which case the operating system 40 may be omitted. One or more data structures 44 may also reside in memory 30, and may be used by the processor 28, operating system 40, or application 42 to store or manipulate data.

The I/O interface 34 may provide a machine interface that operatively couples the processor 28 to other devices and systems, such as the network 22 or external resource 38. The application 42 may thereby work cooperatively with the network 22 or external resource 38 by communicating via the I/O interface 34 to provide the various features, functions, applications, processes, or modules comprising embodiments of the invention. The application 42 may also have program code that is executed by one or more external resources 38, or otherwise rely on functions or signals provided by other system or network components external to the computer system 26. Indeed, given the nearly endless hardware and software configurations possible, persons having ordinary skill in the art will understand that embodiments of the invention may include applications that are located externally to the computer system 26, distributed among multiple computers or other external resources 38, or provided by computing resources (hardware and software) that are provided as a service over the network 22, such as a cloud computing service.

The HMI 36 may be operatively coupled to the processor 28 of computer system 26 in a known manner to allow a user to interact directly with the computer system 26. The HMI 36 may include video or alphanumeric displays, a touch screen, a speaker, and any other suitable audio and visual indicators capable of providing data to the user. The HMI 36 may also include input devices and controls such as an alphanumeric keyboard, a pointing device, keypads, pushbuttons, control knobs, microphones, etc., capable of accepting commands or input from the user and transmitting the entered input to the processor 28.

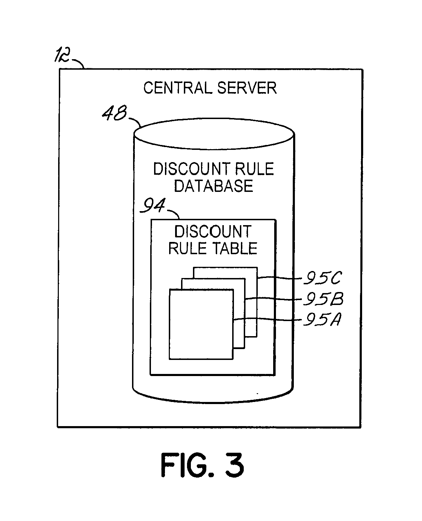

A database 46 may reside on the mass storage memory device 32, and may be used to collect and organize data used by the various systems and modules described herein. The database 46 may include data and supporting data structures that store and organize the data. In particular, the database 46 may be arranged with any database organization or structure including, but not limited to, a relational database, a hierarchical database, a network database, or combinations thereof. A database management system in the form of a computer software application executing as instructions on the processor 28 may be used to access the information or data stored in records of the database 46 in response to a query, where a query may be dynamically determined and executed by the operating system 40, other applications 42, or one or more modules. In an embodiment of the invention, the database 46 may comprise a discount rule database 48 (FIG. 3) containing discount pricing data that provides information relating to discounts offered and available to passengers when pricing a fare for travel along a segment of a travel itinerary.

Referring now to FIG. 1, the central server 12 may coordinate with or utilize information stored or provided by one or more of the pricing engine 14, the ticketing system 16, the inventory system 18, or any other suitable computer system, or any combination thereof. The central server 12, the pricing engine 14, the ticketing system 16, and the inventory system 18 provide various travel provider services related to supporting and enhancing of the operations of the travel provider. For example, the pricing engine 14 provides information regarding fare or ticket pricing. The ticketing system 16 provides information regarding the passenger's tickets and electronic miscellaneous documents (EMDs). Inventory system 18 provides information regarding the inventory and availability of the underlying travel provider, for example availability of seating/passage on an airline flight. The inventory system 18 may also provide information regarding the availability of hospitality providers such as hotels and car rentals.

In general, the central server 12 is configured to review data elements from the booking file and to evaluate and consider any available fare discount rules for their applicability with respect to the received data elements from the booking file. For example, the data elements available to the central server 12 may include the passenger name, details relating to one or more of the travel segments in the itinerary, and optionally the passenger date of birth. The central server 12 retrieves available fare discount rules from the discount rule database and iteratively evaluates the conditions or criteria associated with each discount rule to determine whether the data elements of the booking file satisfy the conditions of the discount rule. If central server 12 determines the one or more conditions of a particular discount rule are satisfied, central server 12 stores a reference identifier or discount code of the fare discount associated with the discount rule in the booking file. This discount code in the booking file is later used by pricing engine 14 in pricing the fare.

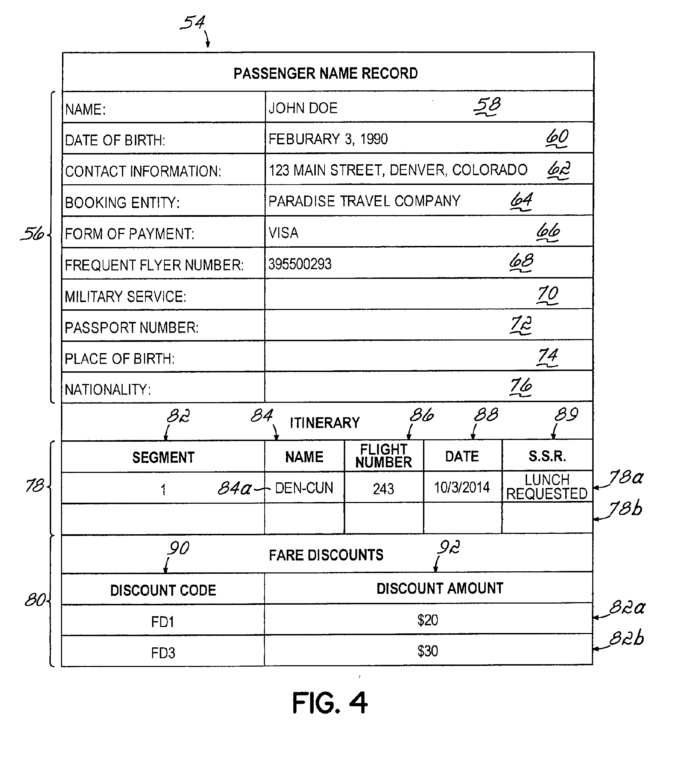

Referring now to FIGS. 1 and 4, the booking file may be embodied in a passenger name record 54 created by a booking agent using a booking agent computing device 24 during an interactive session with the central server 12. FIG. 4 provides a diagrammatic representation of an embodiment of passenger name record 54. Passenger name record 54 is configured and formatted for exemplary purposes with respect to embodiments of the present invention. Passenger name record 54 may include a plurality of data elements 56 characterizing information about the passenger and a travel itinerary of the passenger. Passenger name record 54 may include a name field 58, a data of birth field 60, a contact information field 62, a booking entity field 64, a form of payment field 66, a frequent flyer number field 68, a military service field 70, a passport number field 72, a place of birth field 74, a nationality field 76, an itinerary section 78, a fare discount section 80, and any other data elements that may be required or useful to the underlying travel provider, booking agent, or passenger.

Itinerary section 78 may include multiple rows 78a, 78b with each row representing a travel segment in the itinerary associated with passenger name record 54. Each of the rows 78a, 78b may include a segment identifier field 82, a segment name field 84, a flight number field 86, a flight date field 88, and a special service request (SSR) field 89. For exemplary purposes, each travel segment is described as an airline flight. However, travel segments in the itinerary section 78 may be provided by bus, automobile, train, boat, or any other mode of transport. Segment identifier field 82 includes information relating a reference code or identifier associated with the segment of characterized by that particular row. Segment name field 84 includes information relating to a name associated with the segment. Segment name field 84 may include two reference codes indicating the departure city code or airport code of the segment and the arrival city code or airport code of the segment. Referring to segment name field 84a, "DEN-CUN" indicates the associated segment departs from Denver International Airport (DEN) in Denver, United States, and arrives at Cancun International Airport (CUN) in Cancun, Mexico. Flight number field 86 provides the flight number associated with the segment and flight date field 88 indicates the date of the flight represented by the row. Special service request field 89 holds any special services requested by the passenger.

The fare discount section 80 includes multiple rows 82a, 82b, with each row representing a particular fare discount code associated with passenger name record 54. Each row includes a discount code field 90 and a discount amount field 92. Discount code field 90 includes a reference identifier or discount code associated with a discount. As will be discussed in greater detail below, when the pricing engine 14 receives the passenger name record 54, the pricing engine 14 validates and considers any fare discount codes stored in fare discount section 80 and incorporates the valid discounts when pricing the fare.

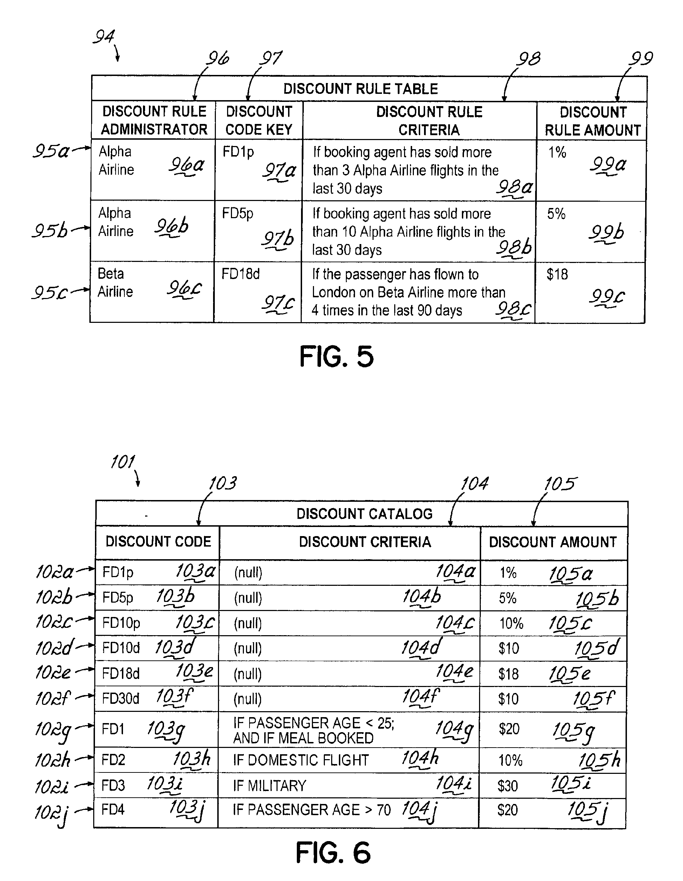

Referring now to FIGS. 1, 3, and 5, the central server 12 may include the discount rule database 48 and may reference discount information stored therein for use in determining the applicability of discounts. The discount rule database 48 is configured to include a discount rule table 94 that stores and maintains a list of fare discount rules available for use in pricing a fare. A pseudo-database table representing discount rule table 94 is shown in FIG. 5 and may include multiple rows, with each row representing a discount rule 95. Each discount rule 95 includes a discount rule administrator field 96, a discount code key field 97, a discount rule criteria field 98, and a discount rule amount field 99. Discount code key field 97 contains a reference identifier to a fare discount. Discount rule criteria field 98 contains at least one criterion or condition and is configured for use by the central server 12 in determining the applicability of the associated discount rule 95. Discount rule amount field 99 is configured for use in providing the discount amount of associated discount rule 95.

Discount rule administrator field 96 is configured for use in referencing the administrator of the particular discount rule 95. The discount rule administrator is the originator of the associated discount rule 95 and may update or delete the discount rule 95 as desired. For example, as indicated in the discount rule administrator field 96a, Alpha Airline is the administrator of discount rule 95a. As such, Alpha Airline is the originator of the discount rule and may update or delete discount rule 95a as desired. As another example, Beta Airline is the originator of discount rule 95c and may update or delete discount rule 95c as desired. As portrayed in discount rule administrator fields 96, Alpha Airline is not authorized to manipulate discount rule 95c and similarly, Beta Airline is not authorized to manipulate discount rules 95a or 95b.

While discount rule table 94 is shown and described as a single table holding discount rules 95 administered by multiple travel providers (e.g. Alpha Airline and Beta Airline), the discount rules 95 may be contained within multiple discount rule tables 94. The multiple discount rule tables 94 may be logically separated into tables corresponding to travel providers, such as a first rules table associated Alpha Airline and a separate rules table associated with Beta Airline. Further, each travel provider may be provided with a separate and distinct database dedicated to discount rules for the associated travel provider. The separate databases may have distinct authentication protocols which are configured to recognize and authenticate the travel provider associated therewith and to prevent access by other travel providers.

A pseudo-database table representing a discount catalog 101 is shown in FIG. 6 and may include multiple rows, with each row representing a fare discount 102. Each fare discount 102 includes a discount code field 103, a discount criteria field 104, and a discount amount field 105. Discount catalog 101 is accessible by the pricing engine 14 to validate a discount found in a booking file by evaluating the conditions stored in discount criteria field 104 of the fare discount 102. If the condition or conditions are satisfied, the pricing engine 14 prices the fare in accordance with the value stored in the discount amount field 105 of the fare discount 102. A value of "(null)" in the discount criteria field 104 is assumed to be always true by the pricing engine 14. Thus, if a booking file contains a reference to a fare discount 102 with a corresponding discount criteria field 104 value of "(null"), the discount 102 is considered valid and applicable in pricing the fare. While the discount criteria field 104 value is shown as "(null)" to indicate to the pricing engine 14 the discount validation was performed by the central server 12, any style of flag or notification element may be used in the alternative. A "(null)" flag is shown simply for exemplary purposes.

For exemplary purposes, discount catalog 101 may reside at the pricing engine 14. Discount catalog 101 may support an entire travel provider industry and may be a legacy style system which is not configured for direct administration by individual travel providers. Thus, discount catalog 101 may be separate and distinct from discount rule table 94 to maintain normal operation of the discount catalog 101 and to allow for individual travel providers to administer individual discount rules 95 via the discount rule table 94. The discount code key field 97 of discount rule table 94 contains a reference or a primary key style link to one of the entries in the discount code field 103 of the discount catalog 101. For example, discount code key field 97b of discount rule 95b contains the value "FD5p". This particular value links discount rule 95b to fare discount 102b, as the discount code field 103b of fare discount 102b contains the value "FD5p". Thus, if the central server 12 determines the conditions found in the discount rule criteria field 98b are satisfied by the data elements 56 of the passenger name record 54, the central server 12 adds discount code "FD5p" to the data elements 56. When the pricing engine 14 prices the fare, the pricing engine 14 reads the discount code "FD5p" in the data elements 56 and retrieves the corresponding fare discount 102 from the discount catalog 101. In this example, fare discount 102b is retrieved because fare discount 102b contains the discount code "FD5p" in discount code field 103b. Pricing engine 14 performs a validation on fare discount 102b by determining whether the data elements 56 satisfy the conditions found in the corresponding discount criteria field 104b. Inasmuch as discount criteria field 103b contains the value "(null)", pricing engine 14 presumes the fare discount 102b is valid and prices the fare in accordance with the value found in the corresponding discount amount field 105b. In this example, discount amount field 105b contains the value "5%". As such, the pricing engine 14 applies a 5% discount to the fare.

Fare discounts 102 in the discount catalog 101 having "(null)" values in the corresponding discount criteria field 104 facilitate the central server 12 validation of discount rules 95. The central server 12 validates a particular discount rule 95 and stores a discount code in the data elements 56 which is presumed valid by the pricing engine by way of the "(null)" value in the discount criteria field 104. In general, the discount rule table 94 is configured to allow individual travel providers to directly administer discount rules 95, while the discount catalog 101 is intended for an indirect administration of fare discounts 102. For example, the discount catalog 101 may be administered by a representative or an appointee of the travel provider industry, or a business partner of the travel provider industry, or the underlying provider of the central server 12 or the pricing engine 14. As such, individual travel providers are not provided direct access to fare discounts 102 in the discount catalog 101. Fare discounts 102g - 102j in the discount criteria field 104 are fare discounts created indirectly by the travel provider industry and are not maintained directly by a particular travel provider.

A series of discounts 102 with "(null)" in the discount criteria field 104 are provided in the discount catalog 104 for facilitating the application of discounts 102 through discount rules 95. By linking each discount rule 95 with a corresponding discount 102 having a "(null)" value in the discount criteria field 104, individual travel providers may directly administer discount rules 95 which in turn generate discounts at the pricing engine 14 through the discount catalog 101. The structure and data flow of applying discounts to fares remains unchanged from the perspective of the pricing engine 14. However, the central server 12 and the discount rule table 94 provide the functionality to allow individual travel providers to directly create and manage a fare discount through the creation of a discount rule 95.

Inasmuch as the central server 12 may access the discount rule criteria 98 information of the discount rule table 94, the pricing engine 14 is configured to accept the discount rule 95 validation provided by the central server 12. While the "(null)" flag system is shown and described, any mechanism or method for configuring the pricing engine 14 to recognize a particular discount 102 is associated with an underlying discount rule 95, which was verified by central server 12, is within the scope of the disclosure. For example, the discount catalog 101 may partition the discounts 102 associated with an underlying discount rule 95 into one partition and the discounts 102 not associated with an underlying discount rule 95 into another partition. Alternatively, a flag system other than the "(null)" identifier may be used to convey to the pricing engine 14 that the discount criteria 104 of the particular discount 102 should be assumed to be satisfied by the passenger data.

In operation, the booking agent enters information into the data elements of the passenger name record through booking agent computing device 24. The booking agent may manually enter fare discount codes into the data elements to obtain discounted pricing on the fare if the booking agent knows that a passenger is eligible for a particular discount. For example, the booking agent may enter fare discount code "FD4" into the passenger name record 54 because the passenger is over the age of seventy. The booking agent knows the age of the passenger and knows of this discount, so the booking agent manually enters "FD4" into the data elements. After the booking agent enters information into the data elements of passenger name record 54, the booking agent makes a request to the central server 12 to price the fare associated with the itinerary of the passenger name record 54. As a result of the request, the passenger name record 54 or relevant data elements 56, such as passenger name, the travel segments, and the passenger date of birth, present in the passenger name record 54 at the time of the request are sent to the central server 12 to determine discount eligibility via the discount rule table 94.

Upon receiving a request to price the fare, the central server 12 may be configured to verify the booking agent is permitted to access the discount rule database 48. Access to the discount rule database 48 may be reserved to a particular pool of users which may be granted access under certain circumstances. Access to the discount rule database 48 may be granted as a reward for an achievement. For example, a booking agent who wins a contest for selling the most flights on Alpha Airlines may be granted access by Alpha Airlines to the discount fare database 48 for ninety days as a prize for winning the contest. This allows the booking agent to provide lower priced fares for ninety days through the fare discounts available by accessing the discount rule database 48. Access to the discount rule database 48 may alternatively be granted in exchange for payment of a fee. For example, a booking agent or a travel agency may purchase access to the discount rule database 48 to provide the customers of the travel agency with lower priced fares through the fare discounts available by accessing the discount rule database 48.

If the central server 12 verifies that the booking agent is permitted to access the discount rule database 48, the central server 12 collects the available discount rules 95 from the discount rule table 94 in the discount rule database 48. To determine the applicability of each discount rule 95 with respect to the data elements 56 of the passenger name record 54, the central server 12 evaluates the conditions located in the discount rule criteria fields 98 to determine whether the data elements 56 satisfy the conditions. If the conditions of a particular discount rule 95 are satisfied by the data elements 56, the central server stores the value of the corresponding discount code key field 97 of the discount rule 95 in the data elements 56. For example, the data elements may indicate the passenger has flown to London on Beta Airline more than four times in the last ninety days. This satisfies the condition associated with discount rule 95c. As such, central server 12 stores "FD18d" in the data elements 56 as "FD18d" is the value found in discount code key field 97c of discount rule 95c.

Once each discount rule 95 is evaluated, the central server 12 sends the passenger name record 54 and a request to price the fare to the pricing engine 14. The pricing engine 14 obtains the standard base fare for the itinerary of the passenger name record 54 from a fare catalog and thereafter proceeds to validate any fare discounts identified in the data elements 56 to determine whether the data elements 56 satisfy the conditions of the fare discount. In the example, the data elements 56 contain the fare discount codes "FD4" and "FD18d" when the data elements 56 arrive at the pricing engine 14. The pricing engine 14 thereafter compares the data elements 56 to the conditions of the corresponding discount criteria field 104 to determine whether the data elements 56 satisfy the condition. Inasmuch as discount 102j corresponds to discount code "FD4", the pricing engine 14 examines the data elements 56 to determine whether the passenger is over the age of seventy, which is the condition specified in the corresponding discount criteria field 104j. If the data elements 56 provide that the passenger is over the age of seventy, the pricing engine applies a $20 discount to the fare. Inasmuch as discount 102e corresponds to discount code "FD18d", the pricing engine does not examine the data elements 56 to determine whether the passenger satisfies a condition because the corresponding discount criteria field 104e has a value of "(null)". Thus, the pricing engine applies an $18 discount to the fare.

After pricing of the fare is completed by the pricing engine 14, the priced fare and related information is passed back to the central server 12. The central server thereafter creates a transitional stored ticket with the priced fare from the pricing engine 14 to reserve the passenger's seat and the priced fare. The priced fare is then communicated from the central server 12 to the booking agent and displayed on display screen 25 of the booking agent computing device 24. The passenger is free to review the fares associated with the passenger name record 54 and proceed with the booking process. The booking agent and the passenger can be confident in knowing the priced fare is the lowest possible price available for the particular passenger as the central server 12 reviews all possible discounts rules 95 in the discount rule table 94 for applicability.

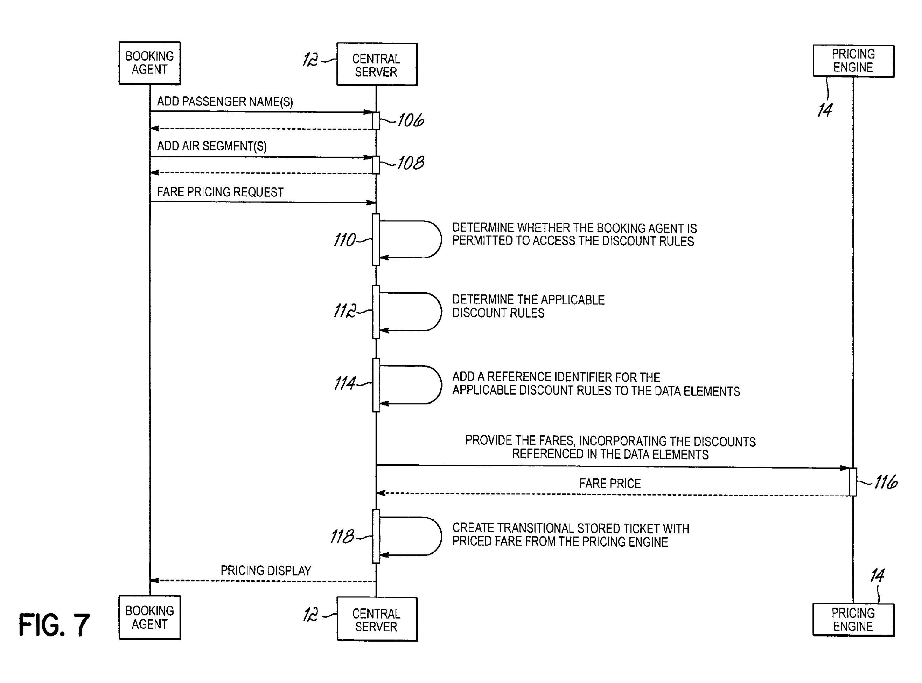

Referring now to FIG. 7, the general process for consideration of discount rules while pricing a fare is shown and diagrammed therein. The process starts with a booking agent adding data elements to a booking file such as a passenger name record. In process block 106, the name of the passenger is added to the booking file by passing the name information from the booking agent to the central server 12. The central server 12 adds the information to the booking file and the process returns to the booking agent. The booking agent thereafter adds additional data elements to the booking file such as the air segment the passenger will travel on and the associated dates of departure and arrival. In process block 108, the air segment is added to the booking file by passing the air segment information from the booking agent to the central server 12. The central server 12 adds the information to the booking file and the process returns to the booking agent.

After the data elements are added to the booking file, the booking agent makes a request to the central server 12 to price a fare for the passenger to travel along the air segment(s) reflected in the booking file. This request is received by the central server 12 which initiates a process block 110. In process block 110, the central server 12 reviews the credentials of the booking agent and determines whether the booking agent has the right to access the discount rules stored in the discount rule database. Access to the discount rules may be limited to a particular pool of users, such as those who purchase access to the discount rules or those who are awarded access as a reward for an achievement. For example, if a particular booking agent meets a set goal of facilitating ten bookings within a certain number of days, access to the discount rules may be granted to the booking agent as a reward. This booking agent in turn may provide lower priced fares to customers by way of access to the discount rules and incorporation of the associated discounts into fare prices. Lower priced fares may increase the booking agent's customer base or customer satisfaction.

If process block 110 determines the booking agent may access the discount rules, the central server 12 initiates a process block 112. In process block 112, central server 12 reviews the data elements of the booking file with respect to one or more conditions associated with the discount rules. Each discount rule is considered and determined to be either applicable or not applicable in view of the data elements of the passenger name record. Any applicable discount rules are noted and process block 112 moves to a process block 114. In process block 114, reference identifiers to the applicable discount rules are stored in the booking file. Thereafter, central server 12 passes relevant data to pricing engine 14 and a process block 116 is initiated. Process block 116 determines the applicable fare for the air segments(s) stored in the booking file, incorporating any discounts referenced in the booking file. The priced fare is returned to the central server 12. After the central server 12 receives the priced fare, a process block 118 is initiated. Process block 118 creates a transitional stored ticket with the priced fare to reserve a space for the passenger on the priced air segments. Thereafter, the fare price is returned to the booking agent for further use in the booking process.

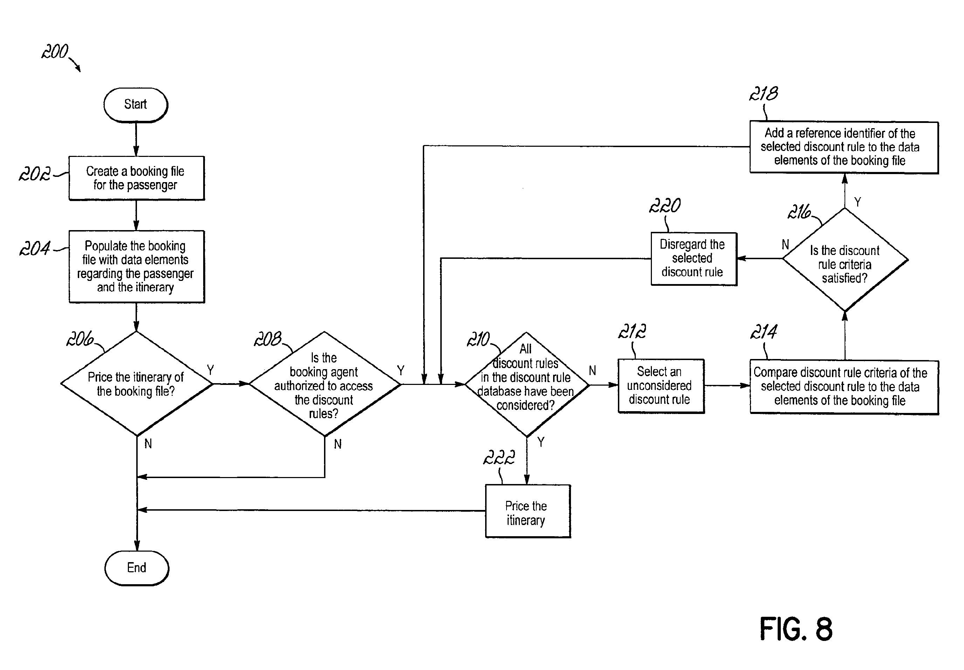

Referring now to FIG. 8, a flowchart depicts a process 200 that may be executed to consider discount rules when pricing a fare. Process 200 begins with a block 202, wherein a booking file is created for a passenger. This booking file may be embodied by a passenger name record or another data structure for incorporating information regarding a passenger and an itinerary associated with the passenger. Block 202 proceeds to a block 204 once a booking file is created for the passenger. In block 204, the booking file is populated with data elements regarding the passenger and the itinerary of the passenger. These data elements may include the passenger name and information regarding travel segments of the itinerary. After the booking file is populated with data elements, block 204 proceeds to a block 206. In block 206, process 200 determines whether the itinerary of the booking file should be priced. Pricing the itinerary provides information regarding the fares associated with traveling along the itinerary. If block 206 determines the itinerary of the booking file should be priced (the "Yes" branch of decision block 206), process 200 proceeds to a block 208. Conversely, if block 206 determines the itinerary of the booking file should not be priced (the "No" branch of decision block 206), block 206 proceeds to terminate process 200.

Block 208 determines whether the booking agent is authorized to access the discount rules. In response to determining that the booking agent is authorized to access the discount rules (the "Yes" branch of decision block 208), block 208 proceeds to a block 210. Conversely, if the booking agent is not authorized to access the discount rules (the "No" branch of decision block 208), block 208 proceeds to terminate process 200. Block 210 determines whether all discount rules have been considered by process 200. If all discount rules have not been considered (the "No" branch of decision block 210), block 210 proceeds to a block 212. Conversely, if all discount rules have been considered (the "Yes" branch of decision block 210), block 210 proceeds to a block 222. Block 212 selects an unconsidered discount rule and proceeds to a block 214. Each discount rule includes at least one condition for use in determining whether the discount rule is applicable. If the conditions are satisfied by the data elements, the discount rule is applicable for use in pricing the fare. If the conditions are not satisfied by the data elements, the discount rule is not applicable for use in pricing the fare. In block 214, the conditions associated with the selected discount rule are compared to the data elements of the booking file. Thereafter, block 214 proceeds to a block 216. In block 216, process 200 determines whether the conditions associated with the selected discount rule are satisfied by the data elements of the booking file. If the conditions associated with the selected discount rule are satisfied (the "Yes" branch of decision block 216), block 216 proceeds to a block 218. Conversely, if the conditions associated with the selected discount rule are not satisfied by the data elements of the booking file (the "No" branch in decision block 216), block 216 proceeds to a block 220.

In block 218, a reference identifier associated with the selected discount rule is added to the booking file and block 218 proceeds thereafter back to block 210. In block 220, the selected discount rule is disregarded and block 220 proceeds back to block 210. Once all discount rules have been considered, block 210 proceeds to block 222 whereby the itinerary of the booking file is priced in accordance with the data elements of the booking file and including all of the discounts referenced in the booking file. After the itinerary is priced, block 222 proceeds to terminate process 200.

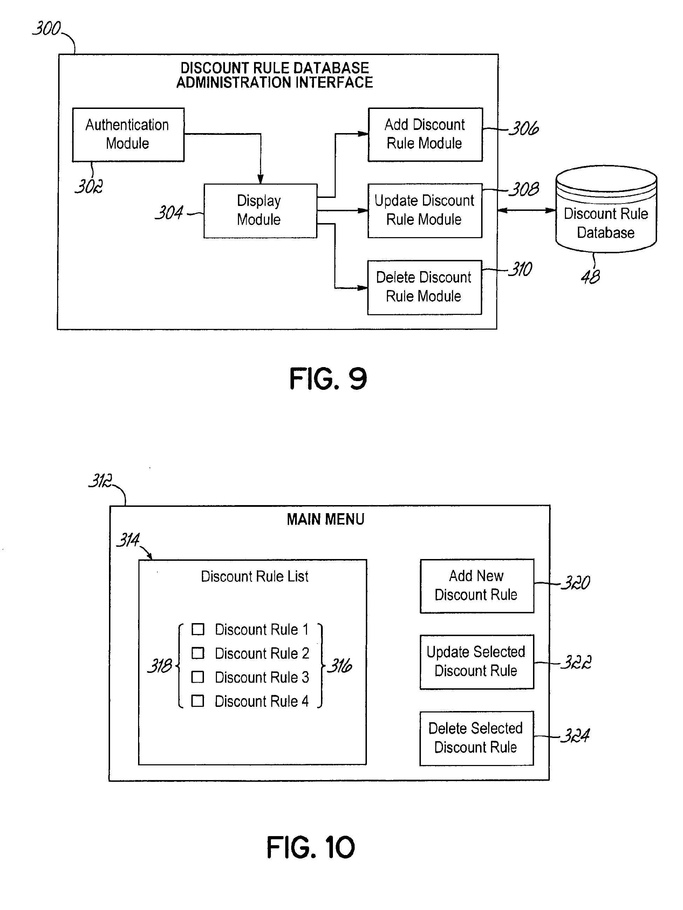

Referring now to FIGS. 1 and 9, a travel provider may add, update, and delete discount rules 95 in the discount rule database 48 through travel provider computing device 20. The travel provider may only administer discount rules 95 associated with the travel provider in the discount rule database 48 to prevent one travel provider from manipulating the discount rules of another travel provider. Specifically, the discount administrator field 97 must match the travel provider to authorize the travel provider to administer the discount rule. The travel provider may use a discount rule administration interface 300 for maintaining the set of discount rules associated with the travel provider in the discount rule database 48. As shown in FIG. 9, the discount rule administration interface 300 may include an authentication module 302. The authentication module 302 prompts the travel provider for credentials such as a user identifier and password. If the entered credentials match the expected credentials associated with the travel provider, the authentication module 302 authenticates the travel provider and allows access to the subsequent modules of discount rule administration interface 300.

Once a travel provider has been authenticated, a display module 304 provides the travel provider with a listing of the available discount rules associated with the travel provider and interactive buttons or input elements to allow the travel provider to administer the set of discount rules associated with the travel provider. To add a new discount rule to the discount rule database 48, the travel provider actuates an add discount rule module 306 and enters the appropriate information when prompted. The add discount rule module 306 thereafter creates a new discount rule 95 entry in the discount rule database 48 and associates this new discount rule 95 with the travel provider by populating discount rule administrator field 97 with a reference to the travel provider. To update a discount rule in the discount rule database 48, the travel provider actuates an update discount rule module 308 and amends the discount rule data as desired. The update discount rule module 308 thereafter amends the data for the discount rule in the discount database 48. To delete a discount rule in the discount rule database 48, the travel provider actuates a delete discount rule module 310 and selects the discount rule the travel provider wishes to remove from discount rule database 48. The delete discount rule module 310 thereafter removes the selected discount rule from the discount rule database 48.

Referring now to FIG. 10, a graphical user interface may be provided by display module 304 of discount rule administration interface 300 to aid the travel provider in administering the set of discount rules associated with the travel provider. The graphical user interface may be a web interface served to the travel provider by the central server 12. A portion of the graphical user interface may be embodied by a main menu 312. Main menu 312 includes a discount rule list 314 for displaying a discount rule name 316 proximate a selection box 318 for selecting the associated discount rule for maintenance. Main menu 312 further includes an add new discount rule button 320 operatively connected to the add discount rule module 306, whereby actuation of the add new discount rule button 320 in turn actuates the add discount rule module 306. Main menu 312 further includes an update selected discount rule button 322 operatively connected to the update discount rule module 308, whereby selection of a box 318 and actuation of the update selected discount rule button 322 actuates the update discount rule module 308 with the selected discount rule as input. Main menu 312 also includes a delete selected discount rule button 324 operatively connected to the delete discount rule module 310, whereby selection of a box 318 and actuation of the delete selected discount rule button 324 actuates the delete discount rule module 310 with the selected discount rule as input.

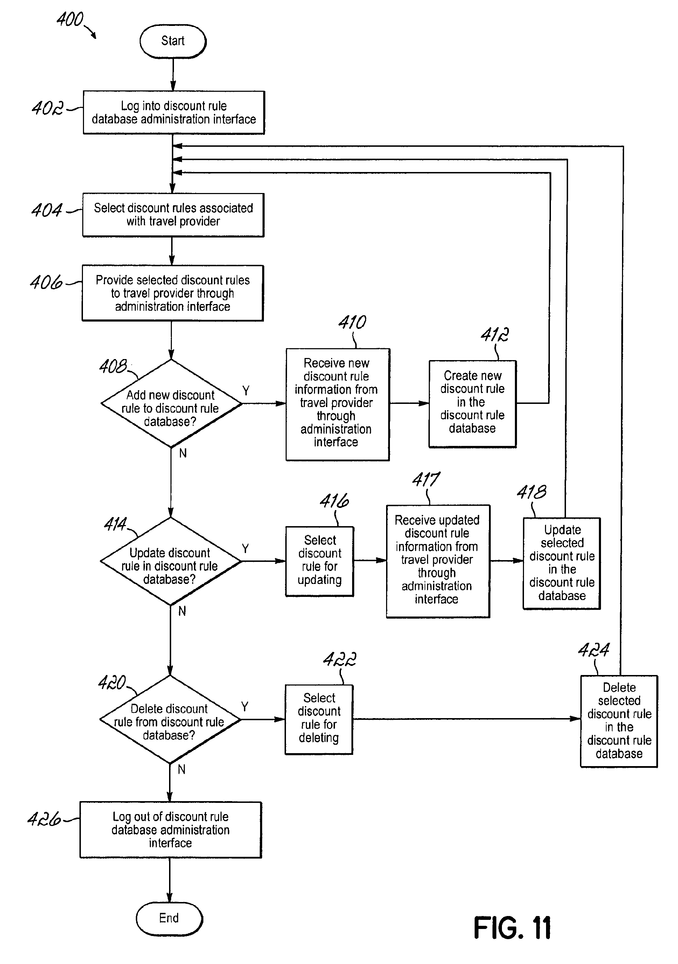

Referring now to Fig. 11, a flowchart depicts a process 400 that may be executed to provide a method for administering the discount rules of the discount rule database. Process 400 begins with a block 402, wherein a travel provider logs into the discount rule database administration interface. The travel provider may be required to provide a login name and password to authenticate the travel provider and determine whether the travel provider has access privileges to the discount rules of the discount rule database. Thereafter, block 402 moves to a block 404. In block 404, the discount rules associated with the travel provider are selected from the discount rule database and block 404 moves to a block 406. In block 406, the selected discount rules are provided to the travel provider through the administration interface. The selected discount rules may be provided by listing each discount rule by discount rule code or discount rule criteria along with various other details regarding the selected discount rule. Thereafter, block 406 moves to a block 408.

In block 408, the travel provider is provided with the option of adding a new discount rule to the discount rule database. If the travel provider wishes to add a new discount rule to discount rule database (the "Yes" branch of decision block 408), block 408 proceeds to a block 410. Conversely, if the travel provider does not want to add a new discount rule to the discount rule database (the "No" branch of decision block 408), block 408 proceeds to a block 414. In block 410, the administration interface receives new discount rule information from the travel provider and proceeds to a block 412. In block 412, a new discount rule containing the information supplied in block 410 is created in the discount rule database. Thereafter, block 412 proceeds back to block 404.

Block 414 determines whether a discount rule in the discount rule database requires updating. If a discount rule in the discount rule database does require updating (the "Yes" branch of decision block 414), block 414 proceeds to a block 416. Conversely, if a discount rule in the discount rule database does not need updating (the "No" branch of decision block 414), block 414 proceeds to a block 420. In block 416 the travel provider selects a discount rule for updating. Thereafter, block 416 proceeds to a block 417, wherein the user provides updated information for the selected discount rule. Thereafter, block 417 proceeds to a block 418 wherein the selected discount rule is updated in the discount rule database. Thereafter, block 418 proceeds back to block 404.

Block 420 determines whether a discount rule in the discount rule database requires deletion. If a discount rule in the discount rule database does require deletion (the "Yes" branch of decision block 420), block 420 proceeds to a block 422. Conversely, if a discount rule in the discount rule database does not require deletion (the "No" branch of decision block 420), block 420 proceeds to block 426. In block 422, the travel provider selects a discount rule for deletion. Thereafter, block 422 proceeds to a block 424 where the selected discount rule is deleted from discount rule database. After the selected discount rule is deleted from the discount rule database, block 424 then proceeds back to block 404. Block 426 logs the travel provider out of the discount rule database administration interface and thereafter terminates process 400.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions which are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within which it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of pricing a fare, the method comprising:
receiving, at a central server, a request to price the fare;
retrieving, by the central server, a discount rule from a discount rule database;
determining, by the central server, whether the discount rule is applicable to price the fare based on a plurality of data elements included in the request;
in response to the determination indicating that the discount rule is applicable to price the fare, updating, by the central server, the data elements to include a reference to the discount rule;
communicating the data elements from the central server to a pricing engine; and
determining, by the pricing engine, a price of the fare based upon a fare discount that is associated with the reference to the discount rule.

2. The method of claim 1 wherein the data elements include an identification of a booking agent, and further comprising:
in response to receiving the request to price the fare, determining, by the central server, whether the booking agent is authorized to access the discount rule database; and
denying access to the discount rule database if the booking agent lacks authorization.

3. The method of claim 1 or claim 2 wherein the data elements include an identification of a travel provider for a travel segment, and further comprising:
associating the discount rule with the travel provider in a record of the discount rule database.

4. The method of claim 3 further comprising:
allowing the travel provider to directly create, modify, and/or delete the discount rule in the discount rule database.

5. The method of claim 4 further comprising:
providing a web interface that allows the travel provider to create, modify, and/or delete the discount rule.

6. The method of claim 4 or claim 5 further comprising:
allowing the travel provider to create, modify, and/or delete the discount rule independent of a global distribution system that provides the central server, the pricing engine, and the discount rules database.

7. The method of any of claims 1 to 6 further comprising:
restricting read access to the discount rule database to a pool of booking agents.

8. The method of claim 7 further comprising:
adding a new booking agent to the pool of booking agents as a reward for an achievement, in exchange for payment of a fee, or a combination thereof.

9. The method of any of claims 1 to 8 further comprising:
collecting a plurality of metrics that are associated with the discount rule database, the discount rule, or a combination thereof; and
generating a report that includes at least one of the metrics.

10. The method of any of claims 1 to 9 wherein the data elements are associated with a passenger, an itinerary, a booking agent, or a combination thereof.

11. A system for pricing a fare, the system comprising:
a discount rule database including a discount rule;
a central server coupled in communication with the discount rule database, the central server including at least one first processor and a first memory including instructions that, when executed by the at least one first processor, cause the central server to:
receive a request to price the fare,
retrieve the discount rule from the discount rule database,
determine whether the discount rule is applicable to price the fare based on a plurality of data elements included in the request, and
in response to the determination indicating that the discount rule is applicable to price the fare, update the data elements to include a reference to the discount rule; and
a pricing engine coupled in communication with the central server, the pricing engine
including at least one second processor and a second memory including instructions that, when executed by the at least one second processor, cause the pricing engine to:
receive the data elements communicated from the central server, and
determine a price of the fare based upon a fare discount that is associated with the reference to the discount rule.

12. The system of claim 11 wherein the instructions, when executed by the at least one first processor, cause the central server to perform the method of any of claims 2 to 10.

13. A computer program product comprising:
a non-transitory computer-readable storage medium; and
instructions stored on the non-transitory computer-readable storage medium that, when executed by at least one processor, cause the at least one processor to:
receive a request to price the fare;
retrieve a discount rule from a discount rule database;
determine whether the discount rule is applicable to price the fare based on a plurality of data elements included in the request;
in response to the determination indicating that the discount rule is applicable to price the fare, update the data elements to include a reference to the discount rule; and
determine a price of the fare based upon a fare discount that is associated with the reference to the discount rule.

14. The computer program product of claim 13 wherein the instructions, when executed by the at least one first processor, cause the at least one processor to perform the method of any of claims 2 to 10
